(19) Europäisches Patentamt
European Patent Office
Office européen des brevets

(11) EP 0 582 195 B1

# (12) EUROPÄISCHE PATENTSCHRIFT

(45) Veröffentlichungstag und Bekanntmachung des Hinweises auf die Patenterteilung:
**20.12.2000 Patentblatt 2000/51**

(51) Int. Cl.7: **C07F 17/00**, C08F 10/00, C08F 4/642, C08F 4/76

(21) Anmeldenummer: **93112057.0**

(22) Anmeldetag: **28.07.1993**

## (54) Verfahren zur Herstellung eines Olefinpolymers unter Verwendung spezieller Metallocene

Process for the preparation of polymers using specific metallocenes

Procédé de préparation de polymères utilisant des métallocènes spécifiques

(84) Benannte Vertragsstaaten:
**AT BE CH DE ES FR GB IT LI LU NL SE**

(30) Priorität: **03.08.1992 DE 4225648**

(43) Veröffentlichungstag der Anmeldung:
**09.02.1994 Patentblatt 1994/06**

(73) Patentinhaber: **TARGOR GmbH**
**55116 Mainz (DE)**

(72) Erfinder:
- **Winter, Andreas, Dr.**
  **D-61479 Glashütten/Ts. (DE)**
- **Rohrmann, Jürgen, Dr.**
  **D-65779 Kelkheim/Ts. (DE)**
- **Antberg, Martin, Dr.**
  **D-65719 Hofheim/Ts. (DE)**
- **Spaleck, Walter, Dr.**
  **D-65835 Liderbach/Ts. (DE)**
- **Herrmann, Wolfgang Anton, Prof. Dr.**
  **D-85354 Freising (DE)**
- **Riepl, Herbert**
  **D-85221 Dachau (DE)**

(56) Entgegenhaltungen:
**EP-A- 0 399 348**

- **CHEMICAL ABSTRACTS, vol. 117, 1992, Columbus, Ohio, US; abstract no. 27208v, LEE, I.M. ET AL. 'ELECTRONIC EFFECTS OF ZIEGLER-NATTA POLYMERIZATION OF PROPYLENE AND ETHYLENE USING SOLUBLE METALLOCENE CATALYSTS' Seite 3 ;**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 582 195 B1

Printed by Xerox (UK) Business Services
2.16.7 (HRS)/3.6

## Beschreibung

Die Erfindung bezieht sich auf ein Verfahren zur Herstellung von Olefinpolymeren und -copolymeren unter Verwendung von Metallocenen mit speziell substituierten Indenylliganden.

Die Verwendung von chiralen Metallocenen als Katalysatorkomponente bei der Olefinpolymerisation ist bekannt und führt zu hochisotaktischen Polyolefinen mit hoher Kristallinität und hohen Schmelzpunkten (vgl. Angew. Chem. 97 (1985) 507, DE-P 40 35 886.0). I. M. Lee et al, Organometallics (1992), 2115-2122 beschreiben ein Ethandiyl-Verbrüchtes, Di-Methoxy-substituiertes Indenylzirconocendichlorid.

Bei dem Einsatz von nicht chiralen Metallocenen erhält man ataktische Polymere, die wegen ihrer unausgewogenen und ungenügenden Produkteigenschaften technisch nur von begrenzter Bedeutung sind.

Von großem Interesse sind Produkte, die in ihrem Eigenschaftsprofil zwischen diesen beiden Extremen liegen.

Es bestand somit die Aufgabe, ein geeignetes Verfahren bzw. ein geeignetes Katalysatorsystem zu finden, das die Herstellung von Polymeren mit reduzierter Kristallinität, erhöhter Schlagzähigkeit, erhöhter Transparenz, hoher Fließfähigkeit bei Verarbeitungstemperatur und reduziertem Schmelzpunkt ermöglicht.

Anwendungsschwerpunkte solcher Polymere sind Weichmacher- und Gleitmittelrezepturen, Schmelzkleberanwendungen, Beschichtungen, Abdichtungen, Isolierungen, Ausgießmassen oder Schalldämmungsmaterialien.

Die Erfindung betrifft somit ein Verfahren zur Herstellung eines Olefinpolymers durch Polymerisation oder Copolymerisation eines Olefins der Formel $R^a$-CH=CH-$R^b$, worin $R^a$ und $R^b$ gleich oder verschieden sind und ein Wasserstoffatom oder einen Kohlenwasserstoffrest mit 1 bis 14 C-Atomen bedeuten, oder $R^a$ und $R^b$ mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einem Metallocen als Übergangsmetallverbindung und einem Cokatalysator gebildet wird, dadurch gekennzeichnet, daß das Metallocen eine Verbindung der Formel I ist

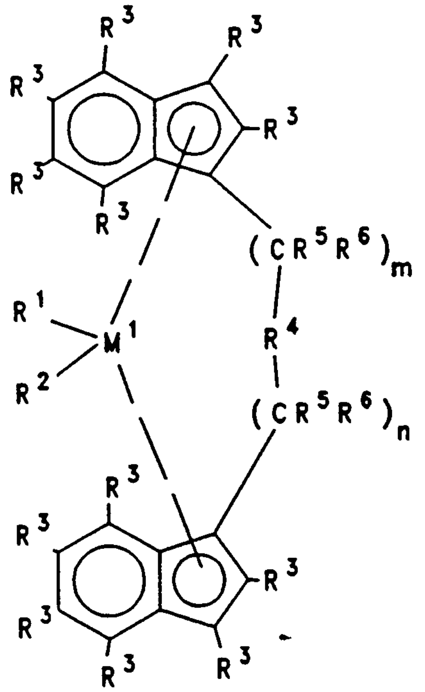

(I)

worin

$M^1$ ein Metall der Gruppe IVb, Vb oder VIb des Periodensystems ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$, unter dem Vorbehalt, daß von den Resten $R^3$ mindestens einer von Wasserstoff verschieden ist, gleich oder verschieden sind und Wasserstoff, F, Cl, Br, $-NR^7R^8$, $-P(O)R^7R^8$, $-P(OR^7)_2$ oder $SR^7$, mit $R^7$ und $R^8$ = Wasserstoff, eine $C_1$-$C_{10}$-Alkylgruppe, eine $C_1$-$C_{10}$-Fluoralkylgruppe, eine $C_6$-$C_{10}$-Arylgruppe, eine $C_6$-$C_{10}$-Fluorarylgruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe, bedeuten.

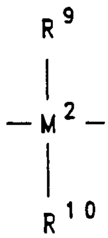 , 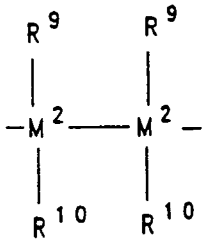 , 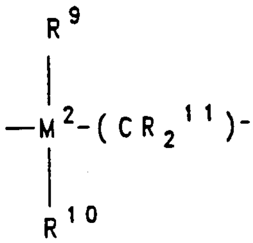 , 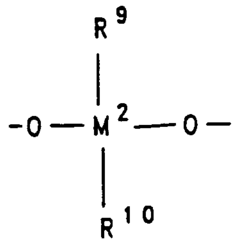 ,

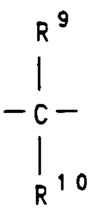 , 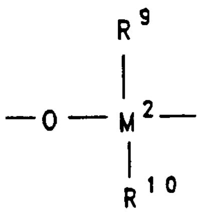 ,

$=BR^9$, $=AlR^9$, -Ge-, -Sn-, -O-, -S-, =SO, $=SO_2$, $=NR^9$, =CO, $=PR^9$ oder $=P(O)R^9$ ist,
wobei

| | |
|---|---|
| $R^9$, $R^{10}$ und $R^{11}$ | gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Aryalkylgruppe, eine $C_8$-$C_{40}$-Arylalkenylgruppe, eine $C_7$-$C_{40}$-Alkylarylgruppe bedeuten oder $R^9$ und $R^{10}$ oder $R^9$ und $R^{11}$ jeweils mit den sie verbindenden Atomen einen Ring bilden, |
| $M^2$ | Silizium, Germanium oder Zinn ist, |
| $R^5$ und $R^6$ | gleich oder verschieden sind und die für $R^9$ genannte Bedeutung haben und |
| m und n | gleich oder verschieden sind und null, 1 oder 2 sind, wobei m plus n null, 1 oder 2 ist. |

Alkyl steht für geradkettiges oder verzweigtes Alkyl. Halogen (halogeniert) bedeutet Fluor, Chlor, Brom oder Jod, bevorzugt Fluor oder Chlor.

Der für das erfindungsgemäße Verfahren zu verwendende Katalysator besteht aus einem Cokatalysator und einem Metallocen der Formel I.

In Formel I ist $M^1$ ein Metall der Gruppe IVb, Vb oder VIb des Periodensystems, beispielsweise Titan, Zirkon, Hafnium, Vanadium, Niob, Tantal, Chrom, Molybdän, Wolfram, vorzugsweise Zirkon, Hafnium und Titan.

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

Die Reste $R^3$ sind trotz gleicher Indizierung, gleich oder verschieden, und bedeuten, unter dem Vorbehalt, daß von den Resten $R^3$ mindestens einer von Wasserstoff verschieden ist, Wasserstoff, F, Cl, Br, bevorzugt Wasserstoff, F und Cl, $-NR^7R^8$, $-P(O)R^7R^8$, $-P(OR^7)_2$ oder $SR^7$ sein, mit $R^7$ und $R^8$ = Wasserstoff, eine $C_1$-$C_{10}$-Alkylgruppe, bevorzugt $C_1$-$C_6$-Alkylgruppe, insbesondere Methylgruppe, eine $C_1$-$C_{10}$Fluoralkylgruppe, vorzugsweise $CF_3$-Gruppe, eine $C_6$-$C_{10}$-, vorzugsweise $C_6$-$C_8$-Arylgruppe, eine $C_6$-$C_{10}$-, vorzugsweise $C_6$-$C_8$-Fluorarylgruppe, insbesondere Pentafluorphenylgruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$, vorzugsweise $C_7$-$C_{12}$-

Alkylarylgruppe.

$R^4$ ist

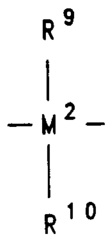 , 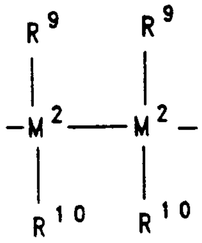 , 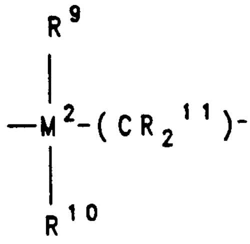 , 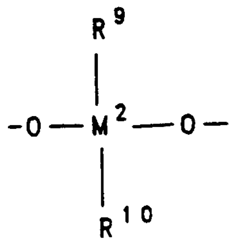 ,

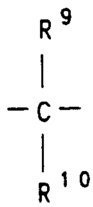 , 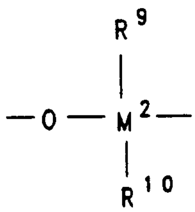 ,

$=BR^9$, $=AlR^9$, -Ge-, -Sn-, -O-, -S-, =SO, $=SO_2$, $=NR^9$, =CO, $=PR^9$ oder $=P(O)R^9$, wobei $R^9$, $R^{10}$ und $R^{11}$ gleich oder verschieden sind und ein Wasserstoffatom, ein Halogenatom, eine $C_1$-$C_{10}$-, vorzugsweise $C_1$-$C_4$-Alkylgruppe, insbesondere Methylgruppe, eine $C_1$-$C_{10}$-Fluoralkylgruppe, xvorzugsweise $CF_3$-Gruppe, eine $C_6$-$C_{10}$-, vorzugsweise $C_6$-$C_8$-Arylgruppe, eine $C_6$-$C_{10}$-Fluorarylgruppe, vorzugsweise Pentafluorphenylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe bedeuten, oder $R^9$ und $R^{10}$ oder $R^9$ und $R^{11}$ bilden jeweils zusammen mit den sie verbindenden Atomen einen Ring.

$M^2$ ist Silizium, Germanium oder Zinn, bevorzugt Silizium und Germanium.

$R^4$ ist vorzugsweise $=CR^9R^{10}$, $=SiR^9R^{10}$, $=GeR^9R^{10}$, -O-, -S-, =SO, $=PR^9$ oder $=P(O)R^9$ und besonders bevorzugt $=SiR^9R^{10}$ und $=CR^9R^{10}$.

$R^5$ und $R^6$ sind gleich oder verschieden und haben die für $R^9$ genannte Bedeutung.

m und n sind gleich oder verschieden und bedeuten null, 1 oder 2, bevorzugt null oder 1, wobei m plus n null, 1 oder 2, bevorzugt null oder 1 ist.

Die besonders bevorzugten Metallocene sind die Verbindungen der Formeln A und B

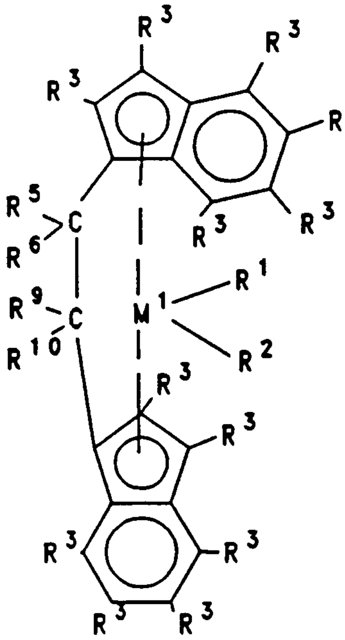

(A)

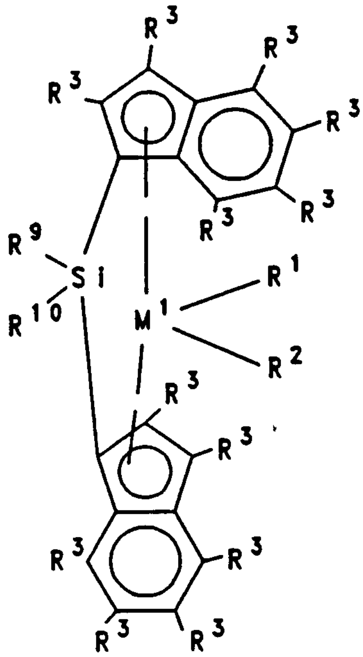

(B)

mit

$M^1$ = Zr, Hf; $R^1$, $R^2$ = ($C_1$-$C_3$)-Alkyl, Chlor; $R^3$ = unter dem Vorbehalt, daß von den Resten $R^3$ mindestens einer von Wasserstoff verschieden ist, Wasserstoff, F, Cl, Wasserstoff, $-NR^7R^8$, $-P(O)R^7R^8$, $-P(OR^7)_2$ oder $SR^7$, bevorzugt Wasserstoff, F, Cl; $R^5$, $R^6$, $R^7$, $R^8$, $R^9$ und $R^{10}$ = ($C_1$-$C_{10}$)-Alkyl, ($C_6$-$C_{10}$)-Aryl, insbesondere Wasserstoff und Methyl.

Die chiralen Metallocene werden bevorzugt als Racemat eingesetzt. Verwendet werden kann aber auch die reine R- oder S-Form. Mit diesen reinen stereoisomeren Formen ist optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochisotaktisches Polymeres erzeugen kann. Wird die meso-Form nicht abgetrennt, entsteht neben isotaktischen Polymeren auch ataktisches Polymer. Für bestimmte Anwendungen - weiche Formkörper beispielsweise - kann dies durchaus wünschenswert sein.

Die Trennung der Stereoisomeren ist im Prinzip bekannt.

Die vorstehend beschriebenen Metallocene können nach folgendem Reaktionsschema hergestellt werden:

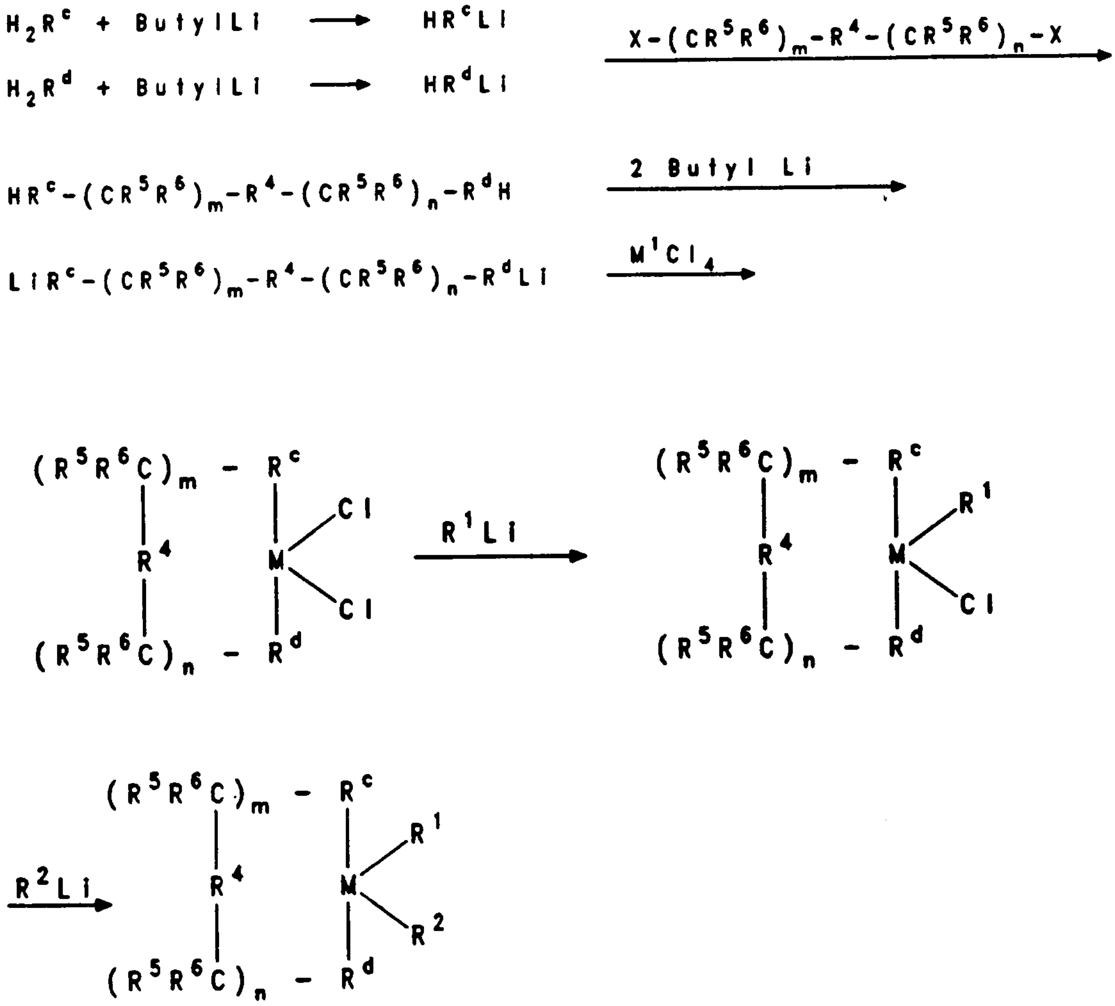


X = Cl, Br, I, O-Tosyl;

$H_2R^c$, $H_2R^d$ =

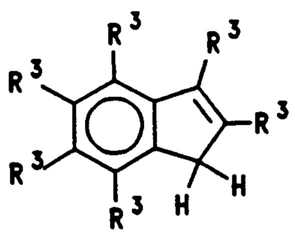

Die prinzipiellen Herstellungsverfahren sind literaturbekannt; vgl. Journal of Organometallic Chem. 288 (1985) 63-67, EP-A 320 762 und die Ausführungsbeispiele.

Die Herstellung der Ausgangsverbindungen $H_2R^c$ bzw. $H_2R^d$ erfolgt beispielsweise gemäß Ausführungsbeispielen.

Erfindungsgemäß wird als Cokatalysator bevorzugt ein Aluminoxan der Formel (II)

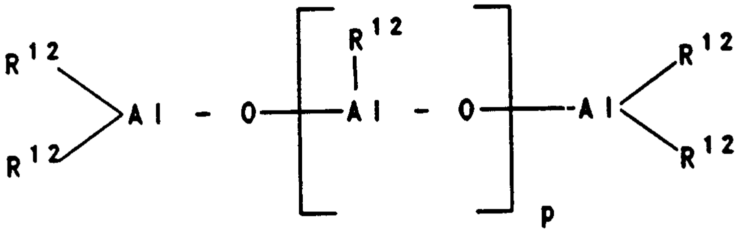

(II)

für den linearen Typ und/oder der Formel (III)

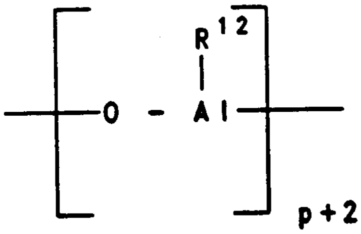

(III)

für den cyclischen Typ verwendet, wobei in den Formeln (II) und (III) die Reste $R^{12}$ gleich oder verschieden sein können und eine $C_1$-$C_6$-Alkylgruppe, eine $C_6$-$C_{18}$-Arylgruppe, Benzyl oder Wasserstoff bedeuten, und p eine ganze Zahl von 2 bis 50, bevorzugt 10 bis 35 bedeutet.

Bevorzugt sind die Reste $R^{12}$ gleich und bedeuten Methyl, Isobutyl, Phenyl oder Benzyl, besonders bevorzugt Methyl.

Sind die Reste $R^{12}$ unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste $R^{12}$) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit veschiedenen Alkylgruppen $R^{12}$ werden entsprechend der gewünschten Zusammensetzung zwei verschiedene Aluminiumtrialkyle ($AlR_3$ + $AlR'_3$) mit Wasser umgesetzt (vgl. S. Pasynkiewicz, Polyhedron 9 (1990) 429 und EP-A 302 424).

Die genaue Struktur der Aluminoxane II und III ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Aluminoxan der Formel (II) und/oder (III) vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol oder Heptan verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Das Metallocen kann auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Erfindungsgemäß können an Stelle oder neben eines Aluminoxans Verbindungen der Formeln $R_xNH_{4-x}BR'_4$, $R_xPH_{4-x}BR'_4$, $R_3CBR'_4$ oder $BR'_3$ als geeignete Cokatalysatoren verwendet werden. In diesen Formeln bedeutet x eine Zahl von 1 bis 4, bevorzugt 3, die Reste R sind gleich oder verschieden, bevorzugt gleich, und bedeuten $C_1$-$C_{10}$-Alkyl, $C_6$-$C_{18}$-Aryl oder 2 Reste R bilden zusammen mit dem sie verbindenden Atom einen Ring, und die Reste R' sind

gleich oder verschieden, bevorzugt gleich, und stehen für $C_6$-$C_{18}$-Aryl, das durch Alkyl, Haloalkyl oder Fluor substituiert sein kann.

Insbesondere steht R für Ethyl, Propyl, Butyl oder Phenyl und R' für Phenyl, Pentafluorphenyl, 3,5-Bistrifluormethylphenyl, Mesityl, Xylyl oder Tolyl (vgl. EP-A 277 003, EP-A 277 004 und EP-A 426 638).

Bei Verwendung der obengenannten Cokatalysatoren besteht der eigentliche (aktive) Polymerisationskatalysator aus dem Reaktionsprodukt von Metallocen und einer der genannten Verbindungen. Daher wird zunächst dieses Reaktionsprodukt bevorzugt außerhalb des Polymerisationsreaktors in einem separaten Schritt unter Verwendung eines geeigneten Lösungsmittels hergestellt.

Prinzipiell ist als Cokatalysator erfindungsgemäß jede Verbindung geeignet, die aufgrund ihrer Lewis-Acidität das neutrale Metallocen in ein Kation überführen und dieses stabilisieren kann ("labile Koordination"). Darüberhinaus soll der Cokatalysator bzw. das aus ihm gebildete Anion keine weiteren Reaktionen mit dem gebildeten Metallocenkation eingehen (vgl. EP-A 427 697).

Zur Entfernung von im Olefin vorhandener Katalystorgifte ist eine Reinigung mit einem Aluminiumalkyl, beispielsweise $AlMe_3$, $Al(i\text{-}Bu)_3$ oder $AlEt_3$ vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Die Polymerisation oder Copolymerisation wird in bekannter Weise in Lösung, in Suspension oder in der Gasphase, kontinuierlich oder diskontinuierlich, ein-oder mehrstufig bei einer Temperatur von -60 bis 200°C, vorzugsweise 30 bis 80°C, durchgeführt. Polymerisiert oder copolymerisiert werden Olefine der Formel $R^a$-CH=CH-$R^b$. In dieser Formel sind $R^a$ und $R^b$ gleich oder verschieden und bedeuten ein Wasserstoffatom oder einen Alkylrest mit 1 bis 14 C-Atomen. $R^a$ und $R^b$ können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbonadien. Insbesondere werden Propylen und Ethylen polymerisiert.

Als Molmassenregler und/oder zur Aktivitätserhöhung wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird das Metallocen in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Lösemittel bzw. pro $dm^3$ Reaktorvolumen angewendet. Das Aluminoxan wird in einer Konzentration von $10^{-5}$ bis $10^{-1}$ mol, vorzugsweise $10^{-4}$ bis $10^{-2}$ mol pro $dm^3$ Lösemittel bzw. pro $dm^3$ Reaktorvolumen verwendet. Die anderen genannten Cokatalysatoren werden in etwa äquimolaren Mengen zum Metallocen verwendet. Prinzipiell sind aber auch höhere Konzentrationen möglich.

Wenn die Polymerisation als Suspensions- oder Lösungspolymerisation durchgeführt wird, wird ein für das Ziegler- Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Pentan, Hexan, Heptan, Isooctan, Cyclohexan, Methylcyclohexan, genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitlichen Abfall der Polymerisationsaktivität zeigt.

Das erfindungsgemäße Verfahren zeichnet sich dadurch aus, daß die beschriebenen Metallocene bevorzugt im technisch interessanten Temperaturbereich zwischen 30 und 80°C bei hoher Polymerisationsaktivität Polymere mit dem gewünschten Eigenschaftsspektrum erzeugen.

Bevorzugt weisen diese Polymere isoktaktische Blocklängen < 50 auf.

Die nachfolgenden Beispiele sollen die Erfindung näher erläutern.

Es bedeuten:

| | | |
|---|---|---|
| VZ = | Viskositätszahl in $cm^3/g$ | |
| $M_w$ = | Molmassengewichtsmittel in g/mol | ermittelt durch Gelpermeationschromatographie |
| $M_w/M_n$ = | Molmassendispersität | |
| Schmp. = | Schmelzpunkt ermittelt mit DSC (20°C/min Aufheiz-/Abkühlgeschwindigkeit) | |

(fortgesetzt)

| | | |
|---|---|---|
| II = | Isotaktischer Index ( II = mm + 1/2 mr ) ermittelt durch $^{13}C$-NMR-Spektroskopie | |
| $n_{iso}$= | Isotaktische Blocklänge ( 1 + 2mm/mr ) | |

Synthese der in den Beispielen verwendeten Metallocene:

Beispiel A

Dimethylbis(5(6)-fluorindenyl)silan (1)

Eine Lösung von 3,6 g (26,8 mmol) 6-Fluorinden (hergestellt nach Marechal et al., Bull. Soc. Chim. Fr. 11 (1973) 3092) in 35 ml Diethylether wurde bei Raumtemperatur mit 10,7 ml (26,8 mmol) einer 2,5 M Butyllithiumlösung in Hexan versetzt und 1 h bei dieser Temperatur gerührt. Die Lösung wurde zu einer Lösung von 1,7 g (13,4 mmol) Dimethyldichlorsilan in 10 ml Diethylether getropft, 17 h bei Raumtemperatur gerührt, auf Eiswasser gegossen und ausgeethert. Das nach Abziehen des Lösemittels zurückgebliebene Öl wurde an 150 g Kieselgel 60 chromatographiert. Mit Hexan/5 % Essigester als Laufmittel ließen sich 3,1 g (71 %) des Ligandsystems 1 als bräunliches Öl isolieren. Das $^{1}H$-NMR-Spektrum zeigt ein starkes Isomerengemisch (Konstitutionsisomere durch Fluor in 5,5'-, 5,6'-bzw. 6,6'-Stellung, Diastereomere durch Chiralitätszentrum in 1-Position und Doppelbindungsisomere). $^{19}F$-NMR-Spektrum ($CDCl_3$/$CFCl_3$, 94,2 MHz): -118,7 (m), -119,3 (m).

rac-Dimethylsilandiylbis(5(6)-fluorindenyl)zirkondichlorid (2)

Eine Lösung von 3,0 g (9,3 mmol) des Ligandsystems 1 in 50 ml Diethylether wurde bei 0°C mit 7,6 ml (18,5 mmol) einer 2,5 M Butyllithiumlösung in Hexan versetzt und über Nacht bei Raumtemperatur gerührt. Nach dem Abziehen des Lösemittels wurde der dunkelrote Rückstand lange im Ölpumpenvakuum getrocknet und mit Hexan gewaschen. Das hellbraune, extrem luftempfindliche Pulver wurde bei -78°C zu einer Suspension von 2,2 g (9,3 mmol) $ZrCl_4$ in 40 ml Methylenchlorid gegeben und innerhalb von 4 h auf Raumtemperatur erwärmt. Nach 1 h Rühren bei dieser Temperatur wurde über eine G 3-Fritte filtriert, mit 50 ml Methylenchlorid nachgewaschen und das orangefarbene Filtrat vollständig eingedampft. Man erhielt 2,9 g (64 %) des Metallocens 2 als rac/meso-Mischung im Verhältnis 1:1. Das orangefarbene Pulver wurde bei Raumtemperatur mit 6 ml Tetrahydrofuran gerührt und über eine G4-Fritte filtriert. Der orangefarbene Niederschlag wurde noch zweimal mit je 1 ml THF gewaschen und im Ölpumpenvakuum getrocknet. Man erhielt 700 mg (15 %) der reinen Racemats 2. $^{1}H$-NMR-Spektrum ($CDCl_3$): (Konstitutionsisomere durch Fluor in 5,5'-, 5,6'-bzw. 6,6'-Stellung) 6,9-7,8 (m, Aromaten H, β-IndH), 6,1 (m, α-IndH), 1,12 (m, $SiCH_3$). Massenspektrum (EI, 70 eV): 484 $M^+$, korrekter Zerfall, korrektes Isotopenmuster.

Beispiel B

Dimethylbis(4(7)-fluorindenyl)silan (3)

Eine Lösung von 6,3 g (47 mmol) 7-Fluorinden (hergestellt aus 2-Fluorzimtsäure analog Dewar et al., J. Amer. Chem. Soc., 95 (1973) 7353) in 50 ml Diethylether wurde bei Raumtemperatur mit 18,8 ml (47 mmol) einer 2,5 M Butyllithiumlösung in Hexan versetzt, 1 h bei Raumtemperatur gerührt und zu einer Lösung von 3,0 g (23,5 mmol) Dimethyldichlorsilan in 15 ml Diethylether getropft. Nach 17 h Rühren wurde analog Beispiel A aufgearbeitet und gereinigt. Man erhielt 4,7 g (72 %) des Ligandsystems 3 als bräunliches Öl. Das $^{1}H$-NMR-Spektrum zeigt ein starkes Isomerengemisch (Konstitutionsisomere durch Fluor in 4,4'-, 4,7'- bzw. 7,7'-Stellung, Diastereomere durch Chiralitätszentrum in 1-Position und Doppelbindungsisomere).

$^{19}F$-NMR-Spektrum ($CDCl_3$/$CFCl_3$, 94,2 MHz): -116 (m), -122 (m).

rac-Dimethylsilandiylbis(4(7)-fluorindenyl)zirkondichlorid (4)

1,0 g (3,1 mmol) des Ligandsystems 3 wurden analog (2) mit 2,7 ml Butyllithium (2,5 M) und 0,70 g (3,0 mmol) Zirkontetrachlorid umgesetzt. Als Rohprodukt erhielt man 1,3 g (89 %) des Metallocens 4 als rac/meso-Mischung im Verhältnis 1:1 (gelboranges Pulver). Durch Umkristallisation aus Toluol erhielt man das reine Racemat.

$^{1}H$-NMR-Spektrum ($CDCl_3$): (Konstitutionsisomere durch Fluor in 4,4'-, 4,7'-bzw.

7,7'-Stellung) 6,7-7,4 (m, Aromaten-H), 6,1 (m, α-IndH), 1,12 (m, $SiCH_3$). Massenspektrum (El, 70 eV): 484 $M^+$, korrekter Zerfall, korrektes Isotopenmuster.

Beispiel F

Dimethylbis(5-chloroindenyl)silan (11)

Eine Lösung von 5,35 g (35,7 mmol) 5-Chlorinden (Bull. Soc. Chim. Fr. 11 (1973) 3096) in 40 ml Ether wurde bei 0°C mit 23 ml einer 1,6 M Butyllithiumlösung versetzt und 4 h bei Raumtemperatur gerührt. Die orangefarbene Lösung wurde bei 0°C zu einer Lösung von 2,35 g (18,3 mmol) Dimethyldichlorsilan in 40 ml Ether getropft. Nach dem Rühren über Nacht wurde analog Beispiel A aufgearbeitet. Die Chromatographie an Kieselgel 40 lieferte mit einem Laufmittelgemisch aus Hexan/Methylenchlorid 10:1 bis 10:3 nach nicht umgesetztem Edukt 6,22 g (49 %) des Ligandsystems 11 als gelbliches Öl (Isomere).

$^1$H-NMR-Spektrum (100 MHz, $CDCl_3$): 7,42 (s), 7,41(s), 7,32 (s,), 7,21(s), 7,19 (s), 7,15 (s), 7,14 (s), 6,83 (m), 6,63 (d), 3,21 (s, 2 H); 0,09 (s), -0,06 (s), - 0,24 (s), -0,27 (s).

rac-Dimethylsilandiylbis(5-chloroindenyl)zirkondichlorid (12)

Eine Lösung von 700 mg (1,96 mmol) des Ligandsystems 11 in 10 ml Ether wurde bei 0°C mit einer Lösung von 10 ml einer 1,6 M Butyllithiumlösung in 30 ml THF versetzt. Nach 3 h Rühren bei Raumtemperatur wurde das Lösemittel unter kräftigem Rühren bis zu einer leichtviskosen Konsistenz abgezogen und mit 60 ml Hexan versetzt. Der Niederschlag wurde bei 0°C abfiltriert und einen Tag im Hochvakuum getrocknet. Man erhielt 483 mg (60 %) des Dilithiosalzes als braunes Pulver. Dieses wurde mit 304 mg $ZrCl_4$ analog (2) umgesetzt. Die Umkristallisation aus Toluol lieferte 120 mg (17 %) des Racemats 12 in Form eines gelben mikrokristallinen Pulvers.

$^1$H-NMR-Spektrum (100 mHz, $CDCl_3$): 7,41 (s), 7,34 (s), 7,19 (s), 7,18 (s), 7,08 (s), 7,04 (s), 6,92 (m), 6,09 (d, $^1J_{HH}$ = 3,34 Hz), 1,1 (s).
$^{13}$C-NMR-Spektrum: 146,6, 136,8, 128,0, 127,2, 126,8, 125,1, 124,9, 121,5, 120,7, -4,7.

Polymerisationsbeispiele

Beispiel 1

Ein trockener 16 $dm^3$-Reaktor wurde mit Propylen gespült und mit 10 $dm^3$ flüssigem Propylen befüllt. Dann wurden 30 $cm^3$ toluolische Methylaluminoxanlösung (entsprechend 40 mmol Al, mittlerer Oligomerisierungsgrad war p = 19) zugegeben und der Ansatz bei 30°C 15 Minuten gerührt.
Parallel dazu wurden 24,1 mg rac-Dimethylsilandiylbis(5(6)-fluorindenyl)zirkondichlorid (Beispiel A, (2)) in 15 $cm^3$ toluolischer Methylaluminoxanlösung (20 mmol Al) gelöst und durch 15 minütiges Stehenlassen voraktiviert.
Die Lösung wurde dann in den Reaktor gegeben und durch Wärmezufuhr wurde der Reaktorinhalt auf 70°C aufgeheizt (10°C/min) und das Polymerisationssystem 1,5 h bei 70°C gehalten.
Gestoppt wurde die Reaktion durch schnelles Abgasen des überschüssigen Monomeren.
Die Aktivität des Metallocens betrug 67,8 kg PP/g Metallocen x h.

VZ = 40 $cm^3$/g; $M_w$ = 25 800 g/mol; $M_w/M_n$ = 2,3; Schmp. = 134°C; II = 88,5 %; $n_{iso}$ = 16.

Beispiel 2

Beispiel 1 wurde mit 74,4 mg des Metallocens wiederholt. Die Polymerisationstemperatur war 30°C und die Polymerisationsdauer 4 Stunden. Die Aktivität des Metallocens war 4,0 kg PP/g Metallocen x h.

VZ = 82 $cm^3$/g; $M_w$ = 47 900 g/mol; $M_w/M_n$ = 2,8; Schmp. = 143°C; II = 94,7 %; $n_{iso}$ = 34.

Beispiel 3

Ein trockener 1,5 $dm^3$-Reaktor wurde mit Stickstoff gespült und bei 20°C mit 0,75 $dm^3$ eines entaromatisierten Benzinschnitts mit dem Siedebereich 100 - 120°C gefüllt. Dann wurde der Gasraum des Reaktors durch 5-maliges Aufdrücken von 2 bar Ethylen und Entspannen stickstofffrei gespült. Danach wurden 3,75 $cm^3$ toluolische Methylaluminoxanlösung (5 mmol Al, p = 19) zugegeben. Unter Rühren wurde der Reaktor auf 30°C (innerhalb von 15 Minuten) aufgeheizt und bei 500 Upm Rührgeschwindigkeit wurde durch Zugabe von Ethylen ein Gesamtdruck von 5 bar eingestellt.

Parallel dazu wurden 0,125 mg des Metallocens rac-Dimethylsilandiylbis(5(6)-fluorindenyl)zirkondichlorid in 1,25 $cm^3$ toluolischer Methylaluminoxanlösung (1,67 mmol Al, p = 19) aufgelöst und durch 15 minütiges Stehenlassen zur vollständigen Reaktion gebracht.
Dann wurde die Lösung in den Reaktor gegeben. Das Polymerisationssystem wurde auf 70°C gebracht und durch entsprechende Kühlung 1 h bei dieser Temperatur belassen.
Durch entsprechende Zufuhr von Ethylen wurde der Druck während dieser Zeit bei 5 bar gehalten.
Durch Zugabe von 2 ml Isopropanol wurde dann die Reaktion gestoppt, das Polymer abfiltriert und im Vakuum getrocknet.
Die Aktivität des Metallocens war 248 kg PE/g Metallocen x h.

VZ = 221 $cm^3$/g; $M_w$ = 147 000 g/mol; $M_w/M_n$ = 3,1.

Beispiel 9

Beispiel 1 wurde wiederholt, als Metallocen wurden jedoch 47,0 mg rac-Dimethylsilandiylbis(5-chloroindenyl)zirkondichlorid verwendet (Beispiel F).
Die Metallocenaktivität war 43 kg PP/g Metallocen x h.

VZ = 20 $cm^3$/g; $M_w$ = 9 900 g/mol; $M_w/M_n$ = 1,9; Schmp. 141°C; II = 96,0 %; $n_{iso}$ = 41.

Beispiel 10

Beispiel 3 wurde wiederholt, als Metallocen wurde jedoch rac-Dimethylsilandiylbis(5-chloroindenyl)zirkondichlorid verwendet (Beispiel F).
Die Metallocenaktivität war 50 kg PE/g Metallocen x h.

$M_w$ = 148 000 g/mol; $M_w/M_n$ = 3,1.

Beispiel 11

Beispiel 1 wurde wiederholt, als Metallocen wurden jedoch 22,9 mg rac-Dimethylsilandiylbis(4(7)-fluorindenyl)zirkondichlorid (Beispiel B, (4)) verwendet.
Die Metallocenaktivität war 57 kg PP/g Metallocen x h.

VZ = 46 $cm^3$/g; $M_w$ = 29 400 g/mol; $M_w/M_n$ = 2,2; Schmp. = 135°C; II = 89,7 %; $n_{iso}$ = 19.

Beispiel 12

Beispiel 1 wurde wiederholt, als Metallocen wurden jedoch 57,9 mg rac-Dimethylsilandiylbis(5,6-dichloroindenyl)-zirkondichlorid eingesetzt.
Die Metallocenaktivität war 27,5 kg PP/g Metallocen x h.

VZ = 42 $cm^3$/g; $M_w$ = 39 500 g/mol; $M_w/M_n$ = 2,0; Schmp. = 129°C; II = 85,3 %; $n_{iso}$ = 12.

**Patentansprüche**

1. Verfahren zur Herstellung eines Olefinpolymers durch Polymerisation oder Copolymerisation eines Olefins der Formel $R^a$-CH=CH-$R^b$, worin $R^a$ und $R^b$ gleich oder verschieden sind und ein Wasserstoffatom oder einen Kohlenwasserstoffrest mit 1 bis 14 C-Atomen bedeuten, oder $R^a$ und $R^b$ mit den sie verbindenden Atomen einen Ring bilden können, bei einer Temperatur von -60 bis 200°C, bei einem Druck von 0,5 bis 100 bar, in Lösung, in Suspension

oder in der Gasphase, in Gegenwart eines Katalysators, welcher aus einem Metallocen als Übergangsmetallverbindung und einem Cokatalysator gebildet wird, dadurch gekennzeichnet, daß das Metallocen eine Verbindung der Formel I ist,

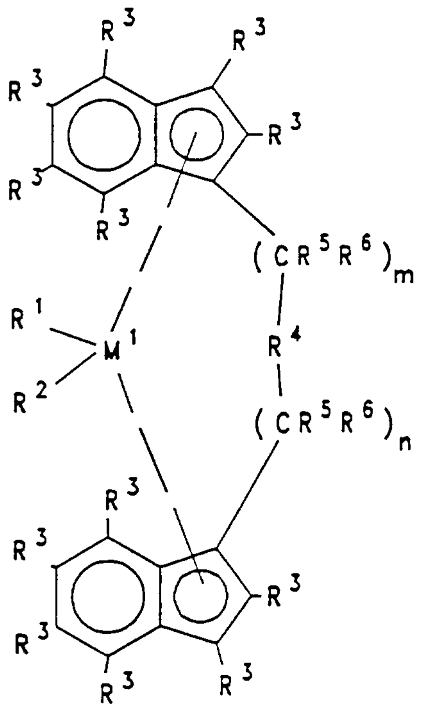

(I)

worin

$M^1$ ein Metall der Gruppe IVb, Vb oder VIb des Periodensystems ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$, unter dem Vorbehalt, daß von den Resten $R^3$ mindestens einer von Wasserstoff verschieden ist, gleich oder verschieden sind und Wasserstoff, F, Cl, Br, $-NR^7R^8$, $-P(O)R^7R^8$, $-P(OR^7)_2$ oder $SR^7$, mit $R^7$ und $R^8$ = Wasserstoff, eine $C_1$-$C_{10}$-Fluoralkylgruppe, eine $C_6$-$C_{10}$-Arylgruppe, eine $C_6$-$C_{10}$-Fluorarylgruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe, bedeuten, wobei die Reste $R^7$ und $R^8$ in $-NR^7R^8$, $-P(O)R^7R^8$, $-P(OR^7)_2$ und $SR^7$ auch eine $C_1$-$C_{10}$-Alkylgruppe bedeuten Können,

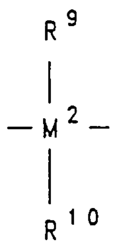 , 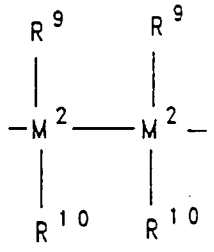 , 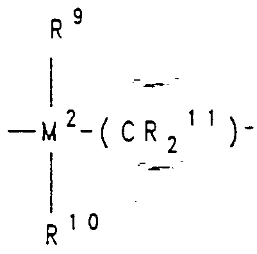 , 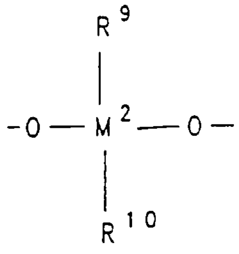 ,

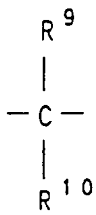 , 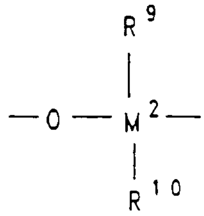 ,

$=BR^9$, $= AlR^9$, -Ge-, -Sn-, -O-, -S-, =SO, $=SO_2$, $=NB^9$, =CO, $=PR^9$
wobei

$R^9$, $R^{10}$ und $R^{11}$ gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^9$ und $R^{10}$ oder $R^9$ und $R^{11}$ jeweils mit den sie verbindenden Atomen einen Ring bilden,

$M^2$ Silizium, Germanium oder Zinn ist,

$R^5$ und $R^6$ gleich oder verschieden sind und die für $R^9$ genannte Bedeutung haben und

m und n gleich oder verschieden sind und null, 1 oder 2 sind, wobei m plus n null, 1 oder 2 ist.

**2.** Verfahren gemäß Anspruch 1, dadurch gekennzeichnet, daß in Formel I $M^1$ Zr oder Hf, $R^1$ und $R^2$ gleich oder verschieden sind und ($C_1$-$C_3$)-Alkyl oder Chlor,

$R^4$ einen Rest

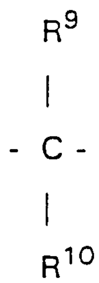 oder 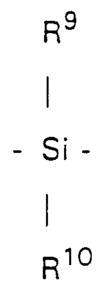

und m plus n null oder 1 bedeuten.

**3.** Verfahren gemäß Anspruch 1 oder 2,
dadurch gekennzeichnet, daß als Cokatalysator ein Aluminoxan der Formel (II)

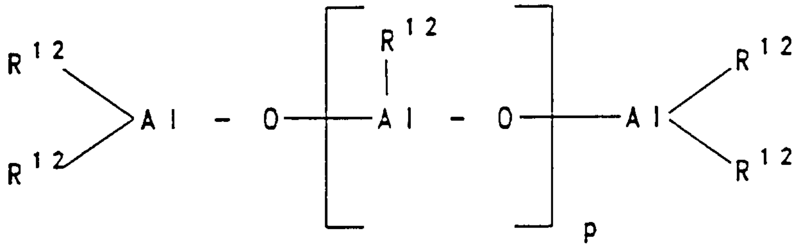

(II)

für den linearen Typ und/oder der Formel (III)

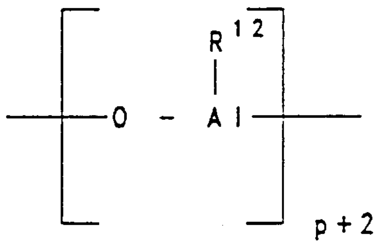

(III)

für den cyclischen Typ verwendet wird,
wobei in den Formeln (II) und (III) die Reste $R^{12}$ gleich oder verschieden sind und eine $C_1$-$C_6$-Alkylgruppe, eine $C_6$-$C_{18}$-Arylgruppe, Benzyl oder Wasserstoff bedeuten und p eine ganze Zahl von 2 bis 50 ist.

**4.** Verfahren gemäß einem oder mehreren der Ansprüche 1 bis 3, dadurch gekennzeichnet, daß als Cokatalysator Methylaluminoxan verwendet wird.

**5.** Verfahren gemäß einem der Ansprüche 1 bis 4, dadurch gekennzeichnet, daß das Metallocen der Formel I vor dem Einsatz in der Polymerisationsreaktion mit einem Aluminoxan der Formel II und/oder III voraktiviert wird.

**6.** Verwendung eines Metallocens der Formel I gemäß einem oder mehreren der Ansprüche 1 bis 5 als Katalysator bei der Olefinpolymerisation.

**7.** Verbindung der Formel I

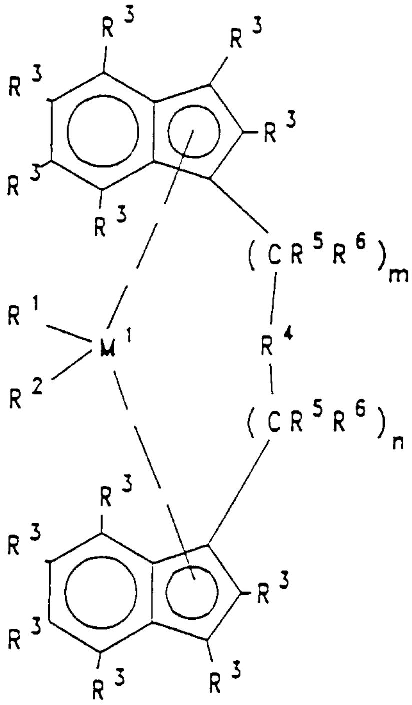

(I)

worin

$M^1$ ein Metall der Gruppe IVb, Vb oder VIb des Periodensystems ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$, unter dem Vorbehalt, daß von den Resten $R^3$ mindestens einer von Wasserstoff verschieden ist, gleich oder verschieden sind und Wasserstoff, F, Cl, Br, $-NR^7R^8$, $-P(O)R^7R^8$, $-P(OR^7)_2$ oder $SR^7$, mit $R^7$ und $R^8$ = Wasserstoff, eine $C_1$-$C_{10}$-Alkylgruppe, eine $C_1$-$C_{10}$-Fluoralkylgruppe, eine $C_6$-$C_{10}$-Arylgruppe, eine $C_6$-$C_{10}$-Fluorarylgruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe, bedeuten.

$R^4$

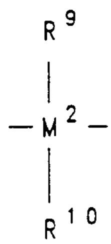 , 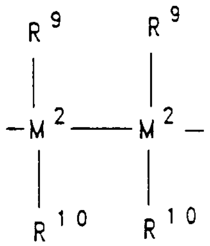 , 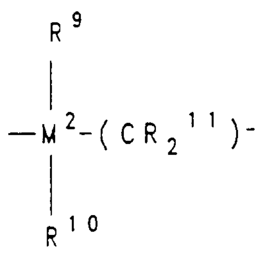 , 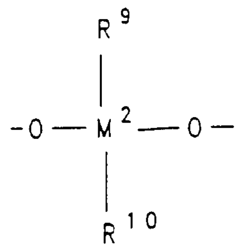 ,

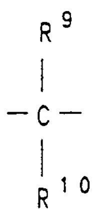 , 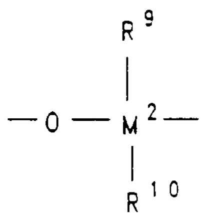 ,

$-BR^9$, $=AlR^9$, Ge-, -Sn-, -O-, -S-, =SO, $=SO_2$, $=NR^9$, =CO, $=PR^9$ oder $=P(O)R^9$ ist, wobei

| | |
|---|---|
| $R^9$, $R^{10}$ und $R^{11}$ | gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^9$ und $R^{10}$ oder $R^9$ und $R^{11}$ jeweils mit den sie verbindenden Atomen einen Ring bilden, |
| $M^2$ | Silizium, Germanium oder Zinn ist, |
| $R^5$ und $R^6$ | gleich oder verschieden sind und die für $R^9$ genannte Bedeutung haben und |
| m und n | gleich oder verschieden sind und null, 1 oder 2 sind, wobei m plus n null, 1 oder 2 ist. |

8. Verbindung gemäß Anspruch 7, dadurch gekennzeichnet, daß in Formel I $M^1$ Zr oder Hf, $R^1$ und $R^2$ gleich oder verschieden sind und ($C_1$-$C_3$)-Alkyl oder Chlor, $R^4$ einen Rest

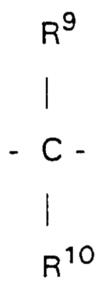 oder 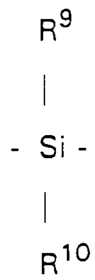

und m plus n null oder 1 bedeuten.

9. Katalysator, welcher aus einem Metallocen und einem Cokatalysator gebildet wird, dadurch gekennzeichnet, daß das Metallocen eine Verbindung der Formel I gemäß Anspruch 7 oder 8 ist.

## Claims

1. A process for the preparation of an olefin polymer by polymerization or copolymerization of an olefin of the formula $R^a$-CH=CH-$R^b$, in which $R^a$ and $R^b$ are identical or different and are a hydrogen atom or a hydrocarbon radical having 1 to 14 carbon atoms, or $R^a$ and $R^b$, together with the atoms connecting them, can form a ring, at a temperature

of from -60 to 200°C, at a pressure of from 0.5 to 100 bar, in solution, in suspension or in the gas phase, in the presence of a catalyst formed from a metallocene as transition-metal compound and a cocatalyst, wherein the metallocene is a compound of the formula I

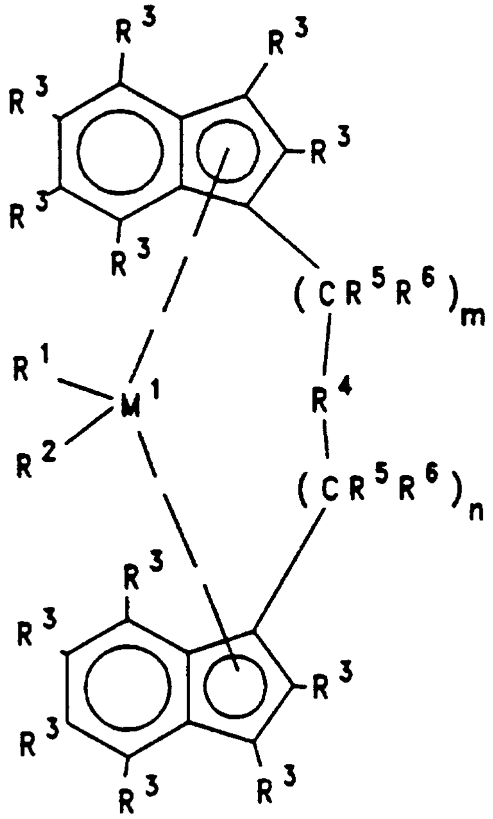

(I)

in which

$M^1$ is a metal from group IVb, Vb or VIb of the Periodic Table,

$R^1$ and $R^2$ are identical or different and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom,

$R^3$, with the proviso that at least one of the radicals $R^3$ is not hydrogen, are identical or different and are hydrogen, F, Cl, Br, $-NR^7R^8$, $-P(O)R^7R^8$, $-P(OR^7)_2$ or $SR^7$, where $R^7$ and $R^8$ are hydrogen, a $C_1$-$C_{10}$-fluoroalkyl group, a $C_6$-$C_{10}$-aryl group, a $C_6$-$C_{10}$-fluoroaryl group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, it also being possible for the radicals $R^7$ and $R^8$ in $-NF^7R^8$,

$-P(O)R^7R^8$, $-P(OR^7)_2$ and $SR^7$ to be a $C_1$-$C_{10}$-alkyl group,

$R^4$ is

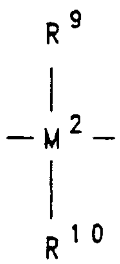 , 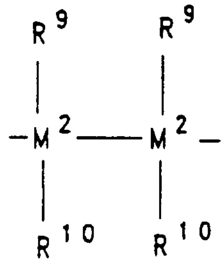 , 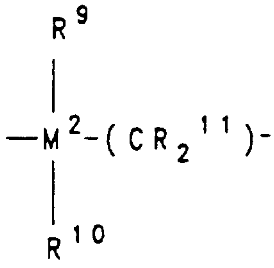 , 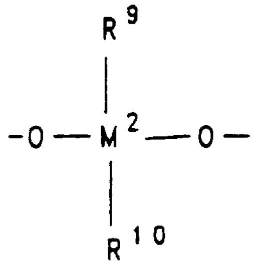 ,

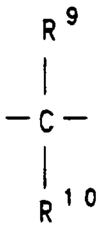 , 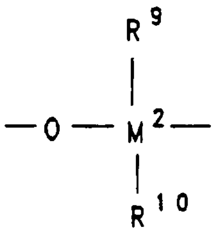 ,

=$BR^9$, =$AlR^9$, -Ge-, -Sn-, -O-, -S-, =SO, =$SO_2$, =$NR^9$, =CO, =$PR^9$
where

| | |
|---|---|
| $R^9$, $R^{10}$ and $R^{11}$ | are identical or different and are a hydrogen atom, a halogen atom, a $C_1$-$C_{10}$-alkyl group, a $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^9$ and $R^{10}$ or $R^9$ and $R^{11}$, in each case together with the atoms connecting them, form a ring, |
| $M^2$ | is silicon, germanium or tin, |
| $R^5$ and $R^6$ | are identical or different and are as defined for $R^9$, and |
| m and n | are identical or different and are zero, 1 or 2, where m plus n is zero, 1 or 2. |

**2.** The process as claimed in claim 1, wherein, in the formula I, $M^1$ is Zr or Hf, $R^1$ and $R^2$ are identical or different and are ($C_1$-$C_3$)-alkyl or chlorine, $R^4$ is a

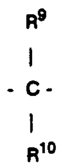 or 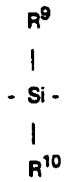

radical, and m plus n are zero or 1.

**3.** The process as claimed in claim 1 or 2, wherein the cocatalyst used is an aluminoxane of the formula (II)

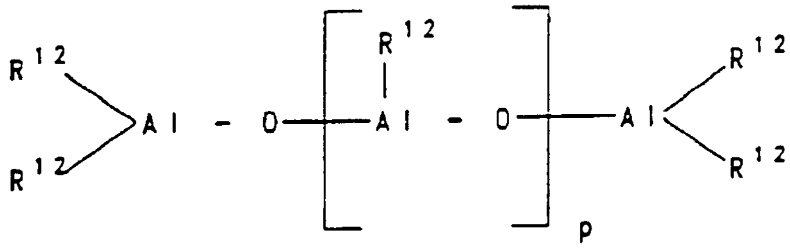

(II)

for the linear type and/or of the formula (III)

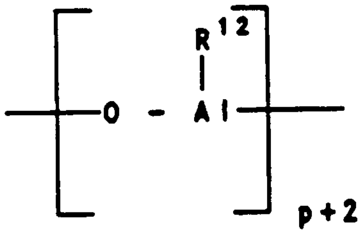

(III)

for the cyclic type, where, in the formulae (II) and (III), the radicals $R^{12}$ are identical or different and are a $C_1$-$C_6$-alkyl group, a $C_6$-$C_{18}$-aryl group, benzyl or hydrogen, and p is an integer from 2 to 50.

**4.** The process as claimed in one or more of claims 1 to 3, wherein the cocatalyst used is methylaluminoxane.

**5.** The process as claimed in any of claims 1 to 4, wherein the metallocene of the formula I is preactivated by means of an aluminoxane of the formula II and/or III before use in the polymerization reaction.

**6.** A method of using a metallocene of the formula I as claimed in one or more of claims 1 to 5 as a catalyst in the polymerization of olefins.

**7.** A compound of the formula I

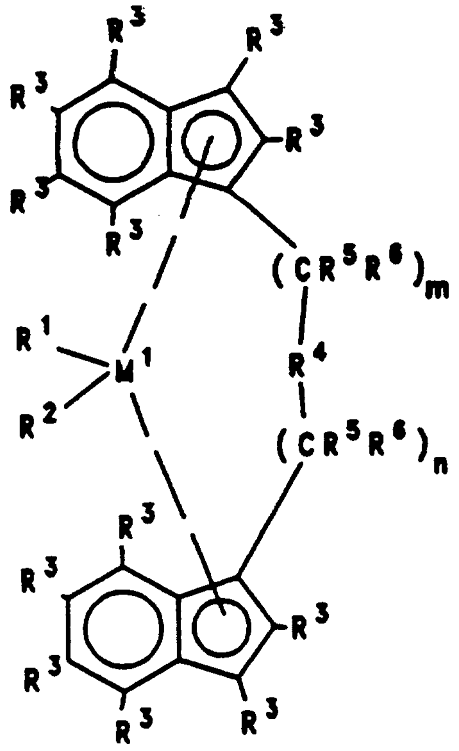

(I)

in which

$M^1$ is a metal from group IVb, Vb or VIb of the Periodic Table,

$R^1$ and $R^2$ are identical or different and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom,

$R^3$, with the proviso that at least one of the radicals $R^3$ is not hydrogen, are identical or different and are hydrogen, F, Cl, Br, $-NR^7R^8$, $-P(O)R^7R^8$, $-P(OR^7)_2$ or $SR^7$, where $R^7$ and $R^8$ are hydrogen, a $C_1$-$C_{10}$-alkyl group, a $C_1$-$C_{10}$-fluoroalkyl group, a $C_6$-$C_{10}$-aryl group, a $C_6$-$C_{10}$-fluoroaryl group, a $C_2$-$C_{10}$-alkenyl group, a $C_7$-$C_{40}$-arylalkyl group, a $C_8$-$C_{40}$-arylalkenyl group or a $C_7$-$C_{40}$-alkylryl group.

$R^4$ is

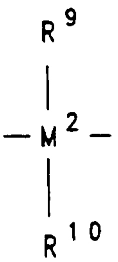 , 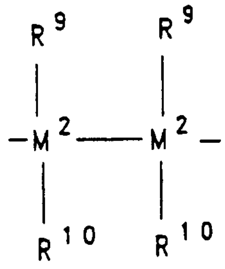 , 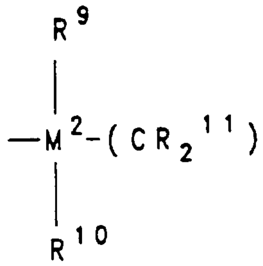 , 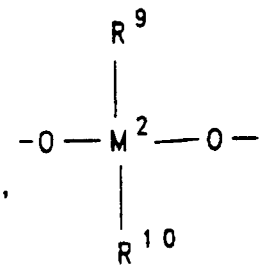 ,

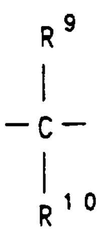 , 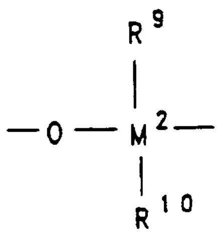 ,

| | |
|---|---|
| | $=BR^9$, $=AlR^9$, -Ge-, -Sn-, -O-, -S-, =SO, $=SO_2$, $=NR^9$, =CO, $=PR^9$ or $=P(O)R^9$, where |
| $R^9$, $R^{10}$ and $R^{11}$ | are identical or different and are a hydrogen atom, a halogen atom, a $C_1$-$C_{10}$-alkyl group, a $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^9$ and $R^{10}$ or $R^9$ and $R^{11}$, in each case together with the atoms connecting them, form a ring, |
| $M^2$ | is silicon, germanium or tin, |
| $R^5$ and $R^6$ | are identical or different and are as defined for $R^9$, and |
| m and n | are identical or different and are zero, 1 or 2, where m plus n is zero, 1 or 2. |

**8.** A compound as claimed in claim 7, wherein, in the formula I, $M^1$ is Zr or Hf, $R^1$ and $R^2$ are identical or different and are $(C_1$-$C_3)$-alkyl or chlorine, $R^4$ is a

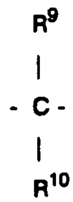 or 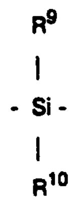

radical, and m plus n are zero or 1.

**9.** A catalyst which is formed from a metallocene and a cocatalyst, wherein the metallocene is a compound of the formula I as claimed in claim 7 or 8.

**Revendications**

**1.** Procédé de préparation d'un polymère d'oléfines par polymérisation ou copolymérisation d'une oléfine de formule $R^a$-CH=CH-$R^b$, où $R^a$ et $R^b$ sont identiques ou différents et représentent un atome d'hydrogène ou un reste hydrocarboné ayant 1 à 14 atomes de carbone, ou $R^a$ et $R^b$ peuvent former un cycle avec les atomes qui les relie, à une température de -60 à 200°C, sous une pression de 0,5 à 100 bar, en solution, en suspension ou en phase gazeuse, en présence d'un catalyseur, formé à partir d'un métallocène en tant que composé de métal de transition et d'un

co-catalyseur, caractérisé en ce que le métallocène est un composé de formule I

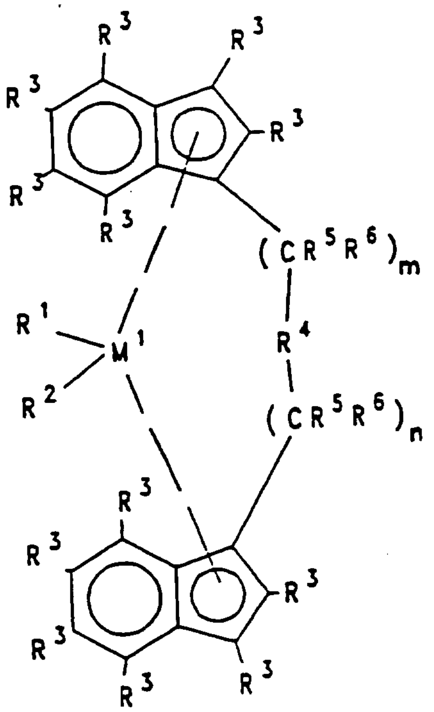

(I)

dans laquelle

$M^1$ représente un métal du groupe IVb, Vb ou VIb de la classification périodique des éléments,

$R^1$ et $R^2$ sont identiques ou différents et représentent un atome d'hydrogène, un groupement alkyle en $C_1$-$C_{10}$, un groupement alcoxy en $C_1$-$C_{10}$, un groupement aryle en $C_6$-$C_{10}$, un groupement aryloxy en $C_6$-$C_{10}$, un groupement alcényle en $C_2$-$C_{10}$, un groupement arylalkyle en $C_7$-$C_{40}$, un groupement alkylaryle en $C_7$-$C_{40}$, un groupement arylalcényle en $C_8$-$C_{40}$ ou un atome d'halogène,

$R^3$ étant spécifié que parmi les restes $R^3$ l'un au moins est différent d'un atome d'hydrogène, sont identiques ou différents et représentent des atomes d'hydrogène, F, Cl, Br, -N-$R^7$-$R^8$, -P(O)$R^7R^8$, -P($OR^7$)$_2$ ou $SR^7$, avec $R^7$ et $R^8$ = atome d'hydrogène, un groupement fluoroalkyle en $C_1$-$C_{10}$, un groupement aryle en $C_6$-$C_{10}$, un groupement fluoroaryle en $C_6$-$C_{10}$, un groupement alcényle en $C_2$-$C_{10}$, un groupement arylalkyle en $C_7$-$C_{40}$, un groupement arylalcényle en $C_8$-$C_{40}$ ou un groupement alkylaryle en $C_7$-$C_{40}$, où les restes $R^7$ et $R^8$ peuvent également représenter, dans -N-$R^7$-$R^8$, -P(O)$R^7R^8$, -P($OR^7$)$_2$ et $SR^7$, un groupement alkyle en $C_1$-$C_{10}$,

$R^4$

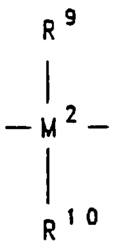,
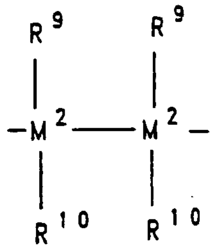,
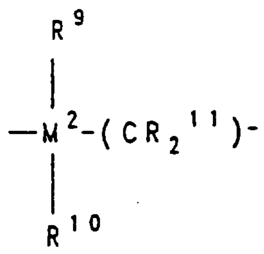,
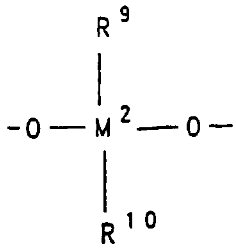,

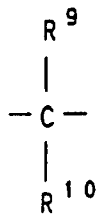,
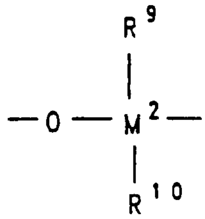,

$=BR^9$, $=AlR^9$, -Ge-, -Sn-, -O-, -S-, =SO, $=SO_2$, $=NR^9$, =CO, $-PR^9$
où

$R^9$, $R^{10}$ et $R^{11}$ sont identiques ou différents et représentent un atome d'hydrogène, un atome d'halogène, un groupement alkyle en $C_1$-$C_{10}$, un groupement fluoroalkyle en $C_1$-$C_{10}$, un groupement aryle en $C_6$-$C_{10}$, un groupement fluoroalkyle en $C_6$-$C_{10}$, un groupement alcoxy en $C_1$-$C_{10}$, un groupement alcényle en $C_2$-$C_{10}$, un groupement arylalkyle en $C_7$-$C_{40}$, un groupement arylalcényle en $C_8$-$C_{40}$, un groupement alkylaryle en $C_7$-$C_{40}$ ou bien $R^9$ et $R^{10}$ ou, $R^9$ et $R^{11}$, représentent à chaque fois un cycle avec les atomes qui les relient,

$M^2$ représente un atome de silicium, de germanium ou d'étain,

$R^5$ et $R^6$ sont identiques ou différents et prennent la signification mentionnée pour $R^9$ et

m et n sont identiques ou différents et valent 0, 1 ou 2, sachant que m plus n vaut 0, 1 ou 2.

**2.** Procédé selon la revendication 1, caractérisé en ce que, dans la formule I, $M^1$ représente Zr ou Hf, $R^1$ et $R^2$ sont identiques ou différents et représentent un groupement alkyle en $C_1$-$C_3$, ou un atome de chlore, $R^4$ représente un reste

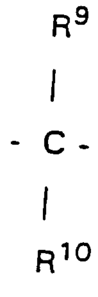
ou
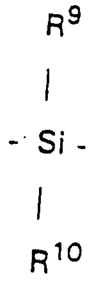

et m plus n vaut 0 ou 1.

**3.** Procédé selon la revendication 1 ou 2, caractérisé en ce que l'on utilise en tant que co-catalyseur un aluminoxane de formule (II)

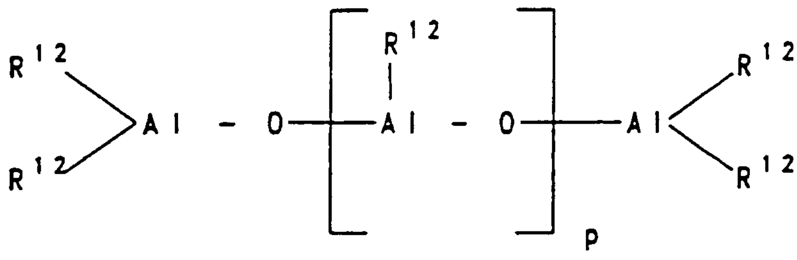

(II)

pour le type linéaire et/ou de formule (III)

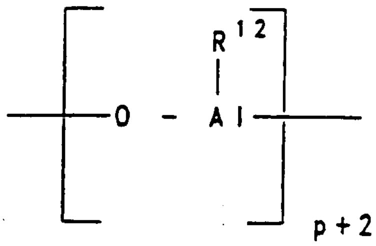

(III)

pour le type cyclique,
où, dans les formules (II) et (III), les restes $R^{12}$ sont identiques ou différents et représentent un groupement alkyle en $C_1$-$C_6$, un groupement aryle en $C_6$-$C_{18}$, un groupement benzyle ou un atome d'hydrogène, et p est un nombre entier de 2 à 50.

**4.** Procédé selon l'une quelconque des revendications 1 à 3, caractérisé en ce que l'on utilise du méthylaluminoxane en tant que co-catalyseur.

**5.** Procédé selon l'une quelconque des revendications 1 à 4, caractérisé en ce que le métallocène de formule I est pré-activé, avec un aluminoxane de formule II et/ou III, avant l'introduction dans la réaction de polymérisation.

**6.** Utilisation d'un métallocène de formule I selon l'une quelconque des revendications 1 à 5, en tant que catalyseur lors de la polymérisation d'une oléfine.

**7.** Composé de formule I

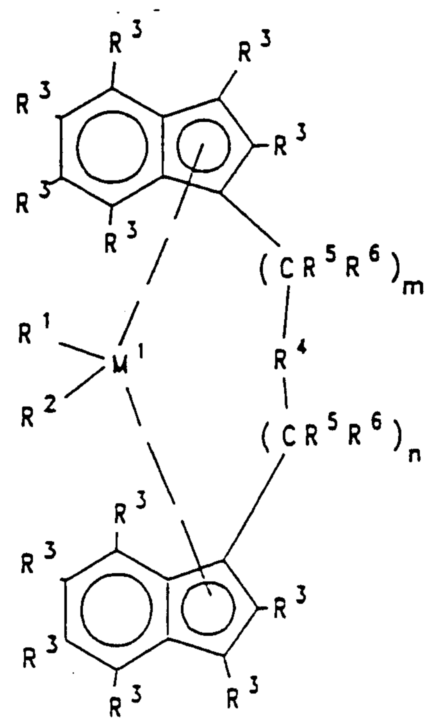

(I)

dans laquelle

M[1] représente un métal du groupe IVb, Vb ou VIb de la classification périodique des éléments,

$R^1$ et $R^2$ sont identiques ou différents et représentent un atome d'hydrogène, un groupement alkyle en $C_1$-$C_{10}$, un groupement alcoxy en $C_1$-$C_{10}$, un groupement aryle en $C_6$-$C_{10}$, un groupement aryloxy en $C_6$-$C_{10}$, un groupement alcényle en $C_2$-$C_{10}$, un groupement arylalkyle en $C_7$-$C_{40}$, un groupement alkylaryle en $C_7$-$C_{40}$, un groupement arylalcényle en $C_8$-$C_{40}$ ou un atome d'halogène,

$R^3$ étant spécifié que parmi les restes $R^3$ l'un au moins est différent d'un atome d'hydrogène, sont identiques ou différents et représentent des atomes d'hydrogène, F, Cl, Br, $-N-R^7-R^8$, $-P(O)R^7R^8$, $-P(OR^7)_2$ ou $SR^7$, avec $R^7$ et $R^8$ = atome d'hydrogène, un groupement alkyle an $C_1$-$C_{10}$, un groupement fluoroalkyle en $C_1$-$C_{10}$, un groupement aryle en $C_6$-$C_{10}$, un groupement fluoroaryle en $C_6$-$C_{10}$, un groupement alcényle an $C_2$-$C_{10}$, un groupement arylalkyle en $C_7$-$C_{40}$, un groupement arylalcényle en $C_8$-$C_{40}$ ou un groupement alkylaryle an $C_7$-$C_{40}$,,

$R^4$

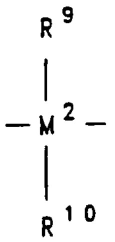 , 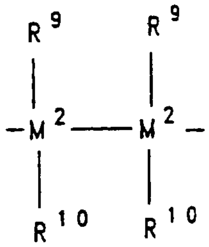 , 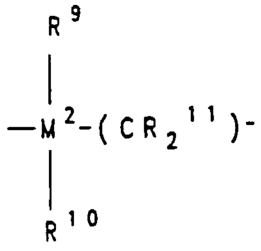 , 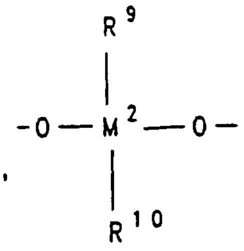 ,

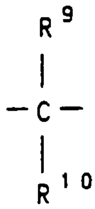 , 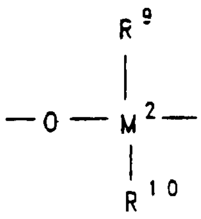 ,

=$BR^9$, =$AlR^9$, -Ge-, -Sn-, -O-, -S-, =SO, =$SO_2$, =$NR^9$, =CO, =$PR^9$ ou =$P(O)R^9$ ist,
où

| | |
|---|---|
| $R^9$, $R^{10}$ et $R^{11}$ | sont identiques ou différents et représentent un atome d'hydrogène, un atome d'halogène, un groupement alkyle en $C_1$-$C_{10}$, un groupement fluoroalkyle en $C_1$-$C_{10}$, un groupement aryle en $C_6$-$C_{10}$, un groupement fluoroaryle en $C_6$-$C_{10}$, un groupement alcoxy en $C_1$-$C_{10}$, un groupement alcényle en $C_2$-$C_{10}$, un groupement arylalkyle en $C_7$-$C_{40}$, un groupement arylalcényle en $C_8$-$C_{40}$, un groupement alkylaryle en $C_7$-$C_{40}$ ou bien $R^9$ et $R^{10}$ ou, $R^9$ et $R^{11}$, représentent à chaque fois un cycle avec les atomes qui les relient, |
| $M^2$ | représente un atome de silicium, de germanium ou d'étain, |
| $R^5$ et $R^6$ | sont identiques ou différents et prennent la signification mentionnée pour $R^9$ et |
| m et n | sont identiques ou différents et valent 0, 1 ou 2, sachant que m plus n vaut 0, 1 ou 2. |

**8.** Composé selon la revendication 7, caractérisé en ce que, dans la formule 1, $M^1$ représente Zr ou Hf, $R^1$ et $R^2$ sont identiques ou différents et représentent un groupement alkyle en $C_1$-$C_3$, ou un atome de chlore, $R^4$ représente un reste

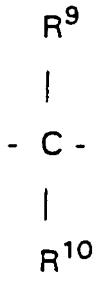 ou 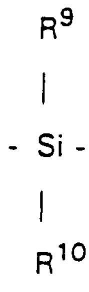

et m plus n vaut 0 ou 1.

**9.** Catalyseur formé à partir d'un métallocène et d'un co-catalyseur, caractérisé en ce que le métallocène est un composé de formule I selon la revendication 7 ou 8.